# EUROPÄISCHE PATENTSCHRIFT

(11) **EP 0 899 182 B1**
(45) Veröffentlichungstag und Bekanntmachung des Hinweises auf die Patenterteilung: **27.03.2002**
(21) Anmeldenummer: 98113991.8
(22) Anmeldetag: 27.07.1998
(51) Int. Cl.: B62D 7/18, F16C 33/80

(54) **Vorderachse eines Lastkraftwagen oder Omnibus mit lenkbaren, nichtangetriebenen Rädern**
Front axle for a truck or bus with steerable non-driving wheels
Essieu avant pour un camion ou autobus à roues non motrices directrices

(30) Priorität: 01.09.1997 DE 19738114
(43) Veröffentlichungstag der Anmeldung: 03.03.1999
(73) Patentinhaber: MAN Nutzfahrzeuge Aktiengesellschaft, 80976 München (DE)
(72) Erfinder: Diehl, Ernst-Ludwig, Dipl.-Ing., 81247 München (DE); Greinöcker, Wolfgang, Dipl.-Ing. (FH), 85551 Kirchheim (DE)

(56) Entgegenhaltungen:
- WO-A-97/13674
- DE-A- 2 751 704

## Beschreibung

Die Erfindung betrifft eine Vorderachse eines Lastkraftwagens oder Omnibusses mit Merkmalen entsprechend dem Oberbegriff des Anspruchs 1.

Bei gebauten Vorderachsen von schweren Serien-Nutzfahrzeugen mit Merkmalen der gattungsgemäßen Art stellt sich das Problem, dass die Achsschenkel-/Achsschenkelbolzenlagerung aufgrund der gegebenen Konstruktion nicht wartungsfrei ist, sondern nach einer bestimmten Fahrzeit bzw. Kilometerleistung des Fahrzeuges gezielt überprüft und nachgeschmiert werden muss. Falls dieses Nachschmieren unterlassen oder vergessen wird, können Lagerschäden auftreten. Dies kann sogar soweit führen, dass ganze Lagerbaugruppen ausgewechselt werden müssen.

Aus der WO 97/13674 ist schon eine Achsschenkel-/Achsschenkelbolzenlagerung gemäß of Oberbegriff des Anspruchs 1 bekannt, die weitgehend wartungsfrei ist. Dabei ist jeweils oben und unten ein Kegelrollenlager mit seinem Außenkäfig in eine Bohrung des Achsschenkels, dort an einer Schulter abgestützt zur Anlage kommend, eingepasst und mit seinem Innenkäfig auf einen Zapfenabschnitt des Achsschenkelbolzens aufgepresst und in dieser Anbaulage durch eine am Ende des Achsschenkels aufgeschraubte Sicherungsmutter gehalten. Nach außen hin ist jede dieser so gegebenen Lagerstellen durch eine Kappe abgedichtet, die in eine Vertiefung im Achsschenkel eingesetzt ist und einen Schmiernippel aufweist, über den Schmierstoff ins Lagerstelleninnere einbringbar ist. Nach oben und unten außen kann bei dieser bekannten Lagerung daher von einer hinreichenden Dichtheit sowohl von innen als auch von außen her ausgegangen werden. Anders sieht dies an den zum Achskörper hin gewandten Lagerstellenseiten aus. Der Achskörper greift nämlich mit relativ großem Spiel in das Achsschenkelmaul ein, wobei oben ein Axialspielspalt bestimmter Größe und unten ein demgegenüber größerer Axialspielspalt gegeben ist. Der Innenraum jedes der beiden Lager ist zur jeweils benachbarten ebenen Achskörperfläche hin miftels einer Gummilippendichtung abgedichtet. Diese Art von Dichtung kann insbesondere wegen des großen Spiels des Achskörpers im Achsschenkelmaul zumindest im Bereich der unteren Lagerstelle keine 100 %ige Dichtheit gewährleisten. Durch die vertikalen Oszillationsbewegungen pumpen die einander zugewandten Flächen von Achskörper und Achsschenkel, so dass einerseits ein Vordringen von Wasser von außen ins Lagerstelleninnere mit der Folge von Korrosion und andererseits ein Herauspressen von Schmiermittel aus dem Lagerstelleninneren nach außen nicht vermeidbar ist.

Des weiteren ist es aus der DE 2751704 A1 bekannt, ein Nadellager in einer Hülse aufzunehmen und über diese in eine Lagerbohrung eines Achsschenkels einzupassen. Der Innenraum dieser Hülse ist von außen her durch einen über eine Sollbruchstelle mit ihr verbundenen, gleichzeitig den Boden bilden Verschlussdeckel abdichtet. Eine weitere Hülse nimmt ein zweites Nadellager auf. Der Achskörper ist im Achsschenkelmaul über ein Axiallager abgestützt. Die die beiden Hülsen aufnehmende Bohrung im Achsschenkel ist nach dem zweiten Nadellager zum Axiallager hin durch einen einfachen Dichtring abgedichtet. Das Axiallager ist außen durch ein nicht näher definiertes, sich zwischen den beiden einander zugewandten Planflächen von Achsschenkelmaul und Achskörper erstreckendes Dichtungselement abgelichtet. Es muss bezweifelt werden, ob diese Art von Lagerung auf Dauer dicht ist.

Es ist daher Aufgabe der Erfindung, eine Vorderachse der gattungsgemäßen Art mit einer solchen Achsschenkel-/Achsschenkelbolzenlagerung auszustatten, die ohne Nachschmierung eine extrem hohe Fahrzeit bzw. Kilometerleistung ohne Schaden zu nehmen ermöglicht.

Diese Aufgabe ist bei einer Vorderachse der gattungsgemäßen Art erfindungsgemäß durch das Vorsehen einer wartungsfreien Achsschenkel-/Achsschenkelbolzenlagerung mit Merkmalen entsprechend dem Kennzeichen des Anspruches 1 gelöst.

Vorteilhafte Weiterbildungen bzw. Details der erfindungsgemäßen Lösung sind in den Unteransprüchen angegeben.

Dadurch, dass die Nadellager der oberen und unteren Lagerstelle in topfförmig ausgebildeten Hülsen aufgenommen sind, die mit ihrem Boden jeweils die benachbarte äußere Stirnfläche des Achsschenkelbolzens überdecken, ist wirksam jegliches Vordringen von Schmutz und Wasser von axial außen her zu den Nadellagern und deren Laufflächen am Achsschenkelbolzen verhindert. Da außerdem der Innenraum der besagten topfförmigen Hülsen jeweils durch wenigstens ein Dichtungsorgan zum Achskörper hin abgedichtet ist, wird auch einem radialen Vordringen von Schmutz und Wasser zwischen den parallelen Kontaktflächen des Achskörpers und Achsschenkel-Maules wirksam vorgebeugt. Da somit der Innenraum jeder Lagerstelle hermetisch nach außen abgeschottet ist, genügt es, diesen Lagerinnenraum bzw. die dort gegebenen Freiräume nach dem Zusammenbau der Achse einmal mit Schmierfett auszufüllen. Dieses behält, weil es nicht verunreinigt werden kann, über die gewünschte Standzeit oder gar die gesamte Lebensdauer des Fahrzeugs seine volle Schmierwirkung, mit der Folge, daß die Achsschenkel-/Achsschenkelbolzenlagerung praktisch über die gesamte Standzeit ihren hohen Lagerungsstandard beibehält.

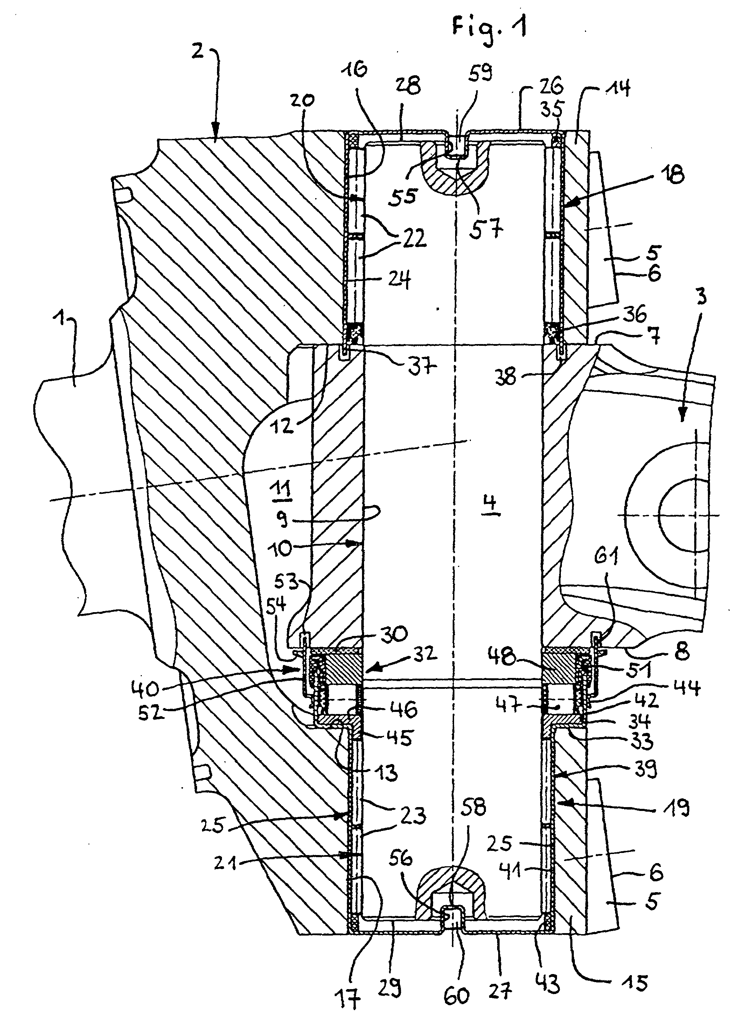

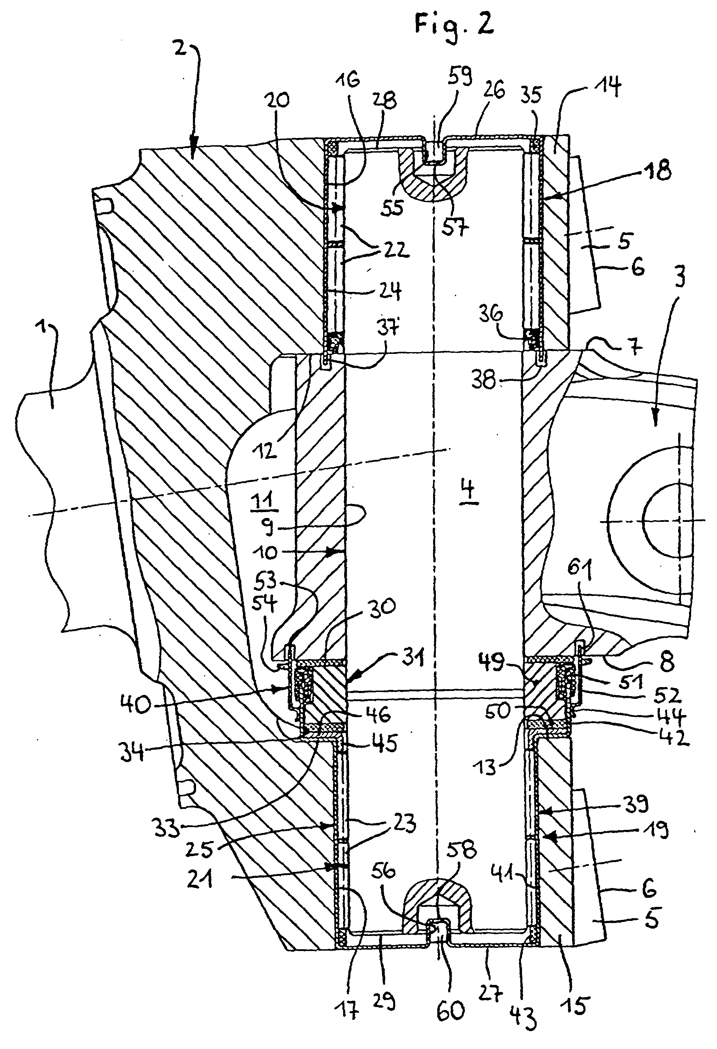

Nachfolgend ist die erfindungsgemäße Lösung anhand zweier in Fig. 1 und 2 der Zeichnung dargestellter Ausführungsbeispiele noch näher erläutert. Dabei sind in den beiden Figuren gleiche bzw. einander entsprechende Bauteile mit gleichem Bezugszeichen angezogen und von der Vorderachse eines schweren Lastkraftwagen jeglicher Bau- und Einsatzart oder eines Omnibusses nur jene Abschnitte dargestellt, die für das Verständnis der Erfindung erforderlich sind.

Die lenkbaren, nichtangetriebenen (nicht dargestellten) Räder der Vorderachse sind auf Lagerzapfen 1 von Achsschenkeln 2 gelagert, die am starren Achskörper 3 schwenkbar über Achsschenkelbolzen 4 angelenkt sind. An den Achsschenkeln 2 sind an geeigneten Stellen Mittel, wie Vorsprünge 5 mit Anschlußflächen 6, vorgesehen, an denen Lenkungsorgane angeschlossen sind (nicht dargestellt), mit denen die Lenkbewegung vom Lenkrad des Fahrzeuges mittelbar auf die Achsschenkel 2 übertragbar ist.

Der starre Achskörper 3 weist an jedem seiner beiden Enden eine obere Stützfläche 7, eine hierzu parallele untere Stützfläche 8 sowie eine hierzu senkrecht stehende Durchgangsbohrung 9 auf, in die ein Achsschenkelbolzen 4 mit seinem Mittelabschnitt 10 eingepaßt ist. Der Achsschenkel 2 weist ein Maul 11 auf, das oben durch eine ebene Fläche 12 und unten durch eine hierzu parallele Fläche 13 begrenzt wird und in das der Achskörper 3 hineinragt. Außerdem sind im Achsschenkel 2 in den beiderseits des Mauls 11 vorhandenen Abschnitten 14, 15 axial zueinander fluchtende sowie senkrecht zu den Flächen 12, 13 stehende Lagerbohrungen 16, 17 gegeben, in deren jeweiligem Bereich die obere Lagerstelle 18 bzw. untere Lagerstelle 19 für den darin mit seinem oberen Zapfenabschnitt 20 bzw. unteren Zapfenabschnitt 21 gelagerten Achsschenkelbolzen 4 angeordnet ist.

Die beiden Lagerstellen 18, 19 je Achsschenkel 2 bzw. Achsschenkelbolzen 4 sind erfindungsgemäß für wartungsfreien Betrieb ausgelegt und weisen jeweils ein insbesondere zweireihiges Nadellager 22 bzw. 23 in einer äußeren Hülse 24, 25 auf. Diese Hülse 24, 25 ist in die betreffende Lagerbohrung 16 bzw. 17 des Achsschenkels 2 eingepaßt, topfförmig ausgebildet ist und überdeckt mit ihrem Boden 26 bzw. 27 die benachbarte äußere Stirnfläche 28 bzw. 29 des Achsschenkelbolzens 4. Der Inneraum jeder der beiden Hülsen 24, 25 ist durch wenigstens ein Dichtungsorgan zum Achskörper 3 hin abgedichtet. In den dargestellten Beispielen ist jeweils eine Gummilippendichtung und eine zusätzliche Labyrinthdichtung vorgesehen. Hierauf ist weiter hinten näher eingegangen.

In Anbaulage übergreift der Achsschenkel 2 mit seinem Maul 11 den endseitigen Anschlußbereich des Achskörpers 3, wobei dieser mit seiner oberen Stirnfläche 7 in Gleitkontakt mit der oberen Begrenzungsfläche 17 des Mauls 11 steht und mit seiner unteren Stützfläche 8 unter Zwischenschaltung wenigstens einer Axialtoleranzen ausgleichenden Paßringscheibe 30 sowie eines Axialgleitlagers 31 (Fig. 2) oder Axialrollenlagers 32 (Fig. 1) und dem Boden 33 einer dieses Lager 31 bzw. 32 aufnehmenden Erweiterung 34 der topfförmigen Hülse 25 der unteren Lagerstelle 19 an der unteren Begrenzungsfläche 13 des Mauls 11 am Achsschenkel 2 abgestützt ist.

Die topfförmige Hülse 24 der oberen Lagerstelle 18 ist vorzugsweise durch ein einstückiges Tiefziehteil aus Stahlblech realisiert, das - soweit notwendig - an bestimmten Stellen spanabhebend nachbearbeitet ist. Der Boden 26 dieser Hülse 24 ist in Einbaulage um ein gewisses Maß, z. B. 1 bis 2 mm, von der benachbarten Stirnfläche 28 des Achsschenkelbolzens 4 beabstandet, wobei diese Distanz durch einen sich an der oberen Reihe von Rollen des Nadellagers 22 und innenseitig des Hülsen-Bodens 26 abstützenden Distanzring 35 erhalten bleibt.

Mit 36 ist eine den Innenraum der Hülse 24 der oberen Lagerstelle 18 zum Achskörper 3 hin abdichtende Gummilippendichtung 36 bezeichnet, die durch eine Metalleinlage armiert ist und sich im Anschluß an die untere Reihe von Rollen des Nadellagers 22 mit ihren Dichtlippen dichtend an die zylindrische Innenfläche der Hülse 24, die Außenfläche des oberen Zapfenabschnitts 20 des Achsschenkelbolzens 4 und die obere Stützfläche 7 am Achskörper 3 anlegt. Die darüber hinaus den Innenraum der topfförmigen Hülse 24 der oberen Lagerstelle 18 abdichtende Labyrinthdichtung ist dadurch realisiert, daß die Hülse 24 mit ihrem unteren Randbereich 37 in den Bereich des Achsschenkel-Maules 11 hinein verlängert ist und dort in eine die obere Stützfläche 7 des Achskörpers 3 axial hinterschneidende Ringnut 38 eintaucht. Diese ist so groß bemessen, daß sie den eintauchenden Randbereich 37 der Hülse 24 innen, außen und stirnseitig mit Abstand umgibt und so ein Ringkanal mit einem nach oben offenen U-Querschnitt verbleibt, der das dichtende Labyrinth bildet.

Die Hülse 25 der unteren Lagerstelle 19 ist aus zwei Teilen 39 und 40 zusammengesetzt. Das erste topfförmige Teil 39 mit dem Boden 27, einer zylinderischen Wand 41 und der Erweiterung 34 mit Boden 33 und zylindrischer Außenwand 42 ist einstückig vorzugsweise durch ein Tiefziehteil aus Stahlblech realisiert, das - soweit notwendig - an bestimmten Stellen spanabhebend nachbearbeitet ist. Der an diesem ersten Hülsen-Teil 39 gegebene Boden 27 der Hülse 25 ist in Einbaulage um ein gewisses Maß, zum Beispiel 1 bis 2 mm, von der benachbarten Stirnfläche 29 des Achsschenkelbolzens 4 beabstandet, wobei dieser Abstand sich aus der Länge der zylindrischen Außenwand 41 zwischen den Böden 33 und 27 sowie einen Distanzring 43 ergibt, der sich zwischen der unteren Reihe von Rollen des Nadellagers 23 und der Innenseite des Bodens 27 erstreckt. Das zweite Teil der Hülse 25 ist durch eine z. B. aus Kunststoff, vorzugsweise jedoch ebenfalls aus Stahlblech durch Tiefziehen hergestellte Schiebemuffe 40 gebildet, die mit einem zylindrischen Führungsabschnitt 44 mit Friktion auf der zylindrischen Außenwand 42 der Erweiterung 34 des ersten Hülsen-Teils 39 sitzt und längs derselben verschiebbar ist.

Innerhalb der unteren Lagerstelle 19 sind die beiden Reihen von Rollen des Nadellagers 23 zwischen dem unteren Distanzring 43 und dem Axialbund 45 einer Lagerringscheibe 46 aufgenommen. Diese bildet gemäß Fig. 2 ein Teil des Axialgleitlagers 31 und gemäß Fig. 1 ein Teil des Axialrollenlagers 32. Letzteres weist Zylinder- oder Kegelrollen 47 auf, die zwischen der Lagerringscheibe 46 und einer weiteren Lagerringscheibe 48 aufgenommen sind. Das Axialgleitlager 31 gemäß Fig. 2 dagegen besteht aus einem Druckring 49, der sich gleitfähig auf einer Lagerringscheibe 50 und über diese auf der Lagerringscheibe 46 abstützt. Auf der Oberseite des jeweiligen Lagers 31 bzw. 32 ist der Achskörper 3 unter Zwischenschaltung der wenigstens einen Paßringscheibe 30 abgestützt.

Der Innenraum der Hülse 25 der unteren Lagerstelle 19 ist zum Achskörper 3 hin, wie folgt dargestellt, abgedichtet. Zum einen ist eine Gummilippendichtung 51 vorgesehen, die den oberen freien Rand der zylindrischen Außenwand 42 der Erweiterung 34 am ersten Teil 39 der Hülse 25 umgreift und mit ihren Dichtlippen den Innenraum der Hülse 25 sowie das Axialgleit- oder -rollenlager 31 bzw. 32 zu der Paßringscheibe 30 oder der unteren Stützfläche 8 am Achskörper 3 hin abdichtet. Die zum anderen vorgesehene Labyrinthdichtung ist dadurch realisiert, daß der obere freie Endbereich des ersten Teils 39 der Hülse 25 einschließlich der Gummilippendichtung 51 von der das zweite Hülsenteil bildenden Schiebemuffe 40 übergriffen wird und diese mit dem oberen Endabschnitt 61 ihrer zylindrischen Außenwand 52 in den Bereich des Achsschenkel-Mauls 11 hinein verlängert ist sowie dort in eine Ringnut 53 eintaucht, die im Achskörper 3, dessen untere Stützfläche 8 axial hinterschneidend, eingearbeitet ist. Diese Ringnut 53 übergreift den eintauchenden Randbereich 61 der Schiebemuffe 40 innen, außen und stirnseitig mit solchem Abstand, daß sich ein Ringkanal mit einem nach unten offenen U-Querschnitt ergibt, der das dichtende Labyrinth bildet. An der Schiebemuffe 40 kann außen ein umlaufender Ringvorsprung 54 vorgesehen sein, der als Anschlag fungiert und mit der unteren Achskörper-Stützfläche 8 zusammenwirkend die axiale Eindringtiefe der Schiebemuffe 40 in die Ringnut 53 begrenzt.

Die Schiebemuffe 40 wird bei der Montage des Achsschenkels 2 und Achsschenkelbolzens 4 zunächst in eine nach unten geschobene Vormontageposition gebracht, in der sie noch nicht in die Ringnut 53 eintaucht, sondern mit ihrem oberen Rand 61 ein gewisses Maß von der unteren Achskörper-Stützfläche 8 beabstandet ist. Dadurch ist es möglich, wenn das Axialgleit- bzw. -rollenlager 31 bzw. 32 sich in Endeinbaulage befindet, den toleranzbedingten Spalt zwischen Lageroberseite und unterer Achskörper-Stützfläche 8 mit einer gegebenenfalls aus mehreren Einzelscheiben zusammengesetzten Paßringscheibe 30 auszufüllen, deren Dicke sich aus der meßtechnisch festgestellten Spalthöhe ergibt. Am Ende der Montagemaßnahmen wird die Schiebemuffe 40 in ihre Labyrinthdichtungs-Funktionslage, also eingetaucht in die Ringnut 53, verschoben.

Für die Einbringung von Schmierfett in den Innenraum und die dort gegebenen Freiräume der oberen und unteren Lagerstelle 18 bzw. 19 weist jede von deren topfförmigen Hülsen 24 bzw. 25 im Zentrum ihres Bodens 26 bzw. 27 eine Vertiefung 55 bzw. 56, an der ein Schmiernippel ansetzbar ist, mit einer Durchgangsbohrung 57 bzw. 58 für die Durchleitung des Schmiermittels auf. Diese Schmiermitteleinbringung erfolgt wegen der Wartungsfreiheit der erfindungsgemäßen Lagerung nur einmalig nach Beendigung des Achsschenkelanbaus an den Achskörper 3. Die Vertiefungen 55, 56 werden anschließend durch Blindstopfen 59 bzw. 60 verschlossen.

## Patentansprüche

1. Vorderachse eines Lastkraftwagens oder Omnibusses mit lenkbaren, nichtangetriebenen Rädern auf Achsschenkeln (2), die schwenkbar am Starrachskörper (3) angelenkt sind über Achsschenkelbolzen (4), von denen jeder mit seinem oberen und unteren Zapfenabschnitt (20, 21) über wenigstens ein Lager (22, 23) in einer Lagerbohrung (16, 17) des Achsschenkels (2) gelagert und mit seinem Mittelabschnitt (10) in eine achskörperinterne Bohrung (9) eingepasst ist, wobei der Achskörper (3) jeweils endseitig oben und unten zueinander parallele Stützflächen (7, 8) aufweist, mit denen er im Maul (11) des Achsschenkels (2) in Bezug auf dort gegebene korrespondierende Gegenflächen (12, 13) axial abgestützt eingepasst ist, **gekennzeichnet durch** eine wartungsfreie Achsschenkel-/ Achsschenkelbolzenlagerung, bei der
- die obere und untere Lagerstelle (18, 19) jeweils ein insbesondere zweireihiges Nadellager (22, 23) in einer Hülse (24, 25) aufweist, die in die betreffende Lagerbohrung (16, 17) des Achsschenkels (2) eingepasst ist, topfförmig ausgebildet ist und mit ihrem Boden (26, 27) die benachbarte äußere Stirnfläche (28, 29) des Achsschenkelbolzens (4) überdeckt,
- der Achskörper (3) mit seiner unteren Stützfläche (8) unter Zwischenschaltung wenigstens einer Axialtoleranzen ausgleichenden Passringscheibe (30) sowie eines Axialgleit- oder -rollenlagers (31, 32) und dem Boden (33) einer dieses Lager (31, 32) aufnehmenden Erweiterung (34) der topfförmigen Hülse (25) der unteren Lagerstelle (19) an der unteren Maul-Gegenfläche (13) des Achsschenkels (2) abgestützt ist,
- der Innenraum der oberen Hülse (24) unten zumindest **durch** eine Gummilippendichtung (36) und der Innenraum der unteren Hülse (25) oben **durch** eine Gummilippendichtung (51) und eine zusätzliche Labyrinthdichtung (53, 61) zum Achskörper (3) hin abgedichtet ist, wobei diese Labyrinthdichtung (53, 61) **durch** eine längs der zylindrischen Außenwand (42) der Erweiterung (34) der unteren Hülse (25) in den Bereich des Achsschenkel-Mauls (11) hinein verschiebbare und mit ihren oberen freien Endabschnitt (61) in eine die untere Achskörper-Stützfläche (8) axial hinterschneidende Ringnut (53) eintauchende Schiebemuffe (40) gebildet ist.

2. Vorderachse nach Anspruch 1, **dadurch gekennzeichnet, dass** der Innenraum der oberen Lager-Hülse (24) außer durch die Gummilippendichtung (36) auch noch durch eine zusätzliche Labyrinthdichtung (53, 61) zum Achskörper (3) hin abgedichtet ist, zu deren Realisierung die Lager-Hülse (24) mit dem unteren Randbereich (37) ihrer zylindrischen Außenwand in das Maul (11) des Achsschenkels (2) hinein verlängert ist und dort in eine die obere Stützfläche (7) des Achskörpers (3) axial hinterschneidende Ringnut (38) eintaucht, die den unteren Randbereich (37) der Lager-Hülse (24) innen, außen und stirnseitig mit solchem Abstand umgibt, dass sich ein labyrinthbildender Ringkanal mit nach oben offenem U-Querschnitt ergibt.

3. Vorderachse nach Anspruch 2, **dadurch gekennzeichnet, dass** die der oberen Lagerstelle (18) zugeordnete Gummilippendichtung (36) mittels einer Metalleinlage armiert ist und sich im Anschluss an die untere Reihe von Rollen des Nadellagers (22) mit ihren Dichtlippen dichtend an die zylindrische Innenfläche der Hülse (24), die Außenfläche des Achsschenkel-Abschnitts (20) sowie die obere Achskörper-Stützfläche (7) anlegt.

4. Vorderachse nach Anspruch 1, **dadurch gekennzeichnet, dass** die Hülse (24) der oberen Lagerstelle (18) durch ein einstückiges topfförmiges Tiefziehteil aus Stahlblech realisiert ist, das - soweit notwendig - an bestimmten Stellen spanabhebend nachbearbeitet ist.

5. Vorderachse nach Anspruch 1, **dadurch gekennzeichnet, dass** das erste topfförmige Teil der Hülse (25) der unteren Lagerstelle (19) aus einem Boden (27), einer sich daran anschließenden zylindrischen Wand (41) und der sich mit ihrem Boden (33) und zylindrischen Außenwand (42) anschließenden, durchmessergrößeren Erweiterung (34) besteht und einstückig aus Stahlblech durch Tiefziehen hergestellt und - soweit notwendig - an bestimmten Stellen spanabhebend nachbearbeitet ist, und dass die aus Kunststoff oder durch Tiefziehen aus Stahlblech hergestellte Schiebemuffe (40) mit einem zylindrischen Führungsabschnitt (44) mit Friktion auf der zylindrischen Außenwand (42) der Erweiterung (34) sitzt und längs derselben axial verschiebbar ist.

6. Vorderachse nach Anspruch 1, **dadurch gekennzeichnet, dass** der obere freie Randbereich der Außenwand (42) der Erweiterung (34) am ersten Teil (39) der topfförmigen Hülse (25) von der Gummilippendichtung (51) umgriffen ist, die mit ihren Dichtlippen den Innenraum der Hülse (25) sowie das Axialgleit- oder -rollenlager (31, 32) zu der Passringscheibe (30) oder der unteren Achskörper-Stützfläche (8) hin abdichtet.

7. Vorderachse nach Anspruch 6, **dadurch gekennzeichnet, dass** der obere freie Endbereich des ersten topfförmigen Teils (39) der Hülse (25) einschließlich der Gummilippendichtung (51) von der Schiebemuffe (40) übergriffen ist.

8. Vorderachse nach Anspruch 1, **dadurch gekennzeichnet, dass** der obere, ringzylindrische Randbereich (61) der mit ihrem oberen Endabschnitt (61) in das Maul (11) des Achsschenkels (2) hinein verschobenen und dabei in die die untere Achskörper-Stützfläche (8) axial hinterschneidende Ringnut (53) eintauchenden Schiebemuffe (40) von der Ringnut (53) innen, außen und stirnseitig mit solchem Abstand übergriffen ist, dass ein das dichtende Labyrinth bildender Ringkanal mit nach unten offenem U-Querschnitt verbleibt.

9. Vorderachse nach Anspruch 8, **dadurch gekennzeichnet, dass** an der Schiebemuffe (40) ein außen umlaufender Ringvorsprung (54) vorgesehen ist, der als Anschlag fungierend und mit der unteren Stützfläche (8) am Achskörper (3) zusammenwirkend die axiale Eintauchtiefe der Schiebemuffe (40) in die Ringnut (53) begrenzt.

10. Vorderachse nach Anspruch 1, **dadurch gekennzeichnet, dass** die topfförmige Hülse (24; 25, 39) jeder Lagerstelle (18, 19) im Zentrum ihres Bodens (26, 27) eine Vertiefung (55, 56) mit kleiner Durchgangsbohrung (57, 58) aufweist, über die nach Beendigung der Achsmontage in den Lager-Innenraum Schmiermittel unter Druck einbringbar ist und die danach durch einen Blindstopfen (59, 60) verschließbar ist.

## Claims

1. Front axle of a truck or bus/coach with steerable, non-driven wheels on steering knuckles (2) slewably located on the rigid axle body (3) via kingpins (4), each of which is with its upper and lower pin sections (20, 21) supported. via at least one bearing (22, 23) in a bearing bore (16, 17) in the steering knuckle (2) and is, with its centre section (10), fitted in an axle-body-internal bore (9), the axle body (3) being provided at its ends with support faces (7, 8) at the top and bottom which are parallel to each other and with which said axle body (3) is axially supported in the jaw (11) of the steering knuckle (2) in relation to the corresponding counterfaces (12, 13) provided on said steering knuckle (2), **characterised by** a maintenance-free steering knuckle/kingpin bearing in which
• the upper and lower bearing points (18, 19) are each provided particularly with a two-row needle bearing (22, 23) in a sleeve (24, 25) which is shaped to fit into the associated bearing bore (16, 17) in the steering knuckle (2), is pot-shaped and covers with its bottom (26, 27) the neighbouring outer frontal area (28, 29) of the kingpin (4),
• the axle body (3) with its lower support face (8) and with the bottom (33) of an extension (34) of the pot-shaped sleeve (25) of the lower bearing point (19), which accommodates an axial sliding or rolling bearing (31, 32), is supported on the lower jaw counterface (13) on the steering knuckle (2), at least one shim (30) for offsetting axial tolerances and said axial sliding or rolling bearing (31, 32) being inserted between said lower support face (8) and the lower jaw counterface (13),
• towards the axle body (3) the interior of the upper sleeve (24) is sealed at the lower end at least by one rubber lip seal (36) and the interior of the lower sleeve (25) is sealed at the upper end by a rubber lip seal (51) and an additional labyrinth seal (53, 61) designed as a sliding sleeve (40) which can be shifted in longitudinal direction along the cylindrical external wall (42) of the extension (34) of the lower sleeve (25) and into the area of the steering-knuckle jaw (11) and, with its upper free end section (61), penetrates into a ring groove (53) axially undercutting the lower axle-body support face (8).

2. Front axle according to Claim 1, **characterised in that** in the interior of the upper bearing sleeve (24) is sealed towards the axle body (3) by the rubber lip seal (36) and by an additional labyrinth seal (53, 61), for whose realisation the bearing sleeve (24) with the lower margin area (37) of its cylindrical external wall is extended into the jaw (11) of the steering knuckle (2) where it penetrates into a ring groove (38) axially undercutting the upper support face (7) of the axle body (3) and encompassing the lower margin area (37) of the bearing sleeve (24) internally, externally and at the end face at such a distance that a labyrinth-formed annular duct with a, U-cross-section open towards the top is formed.

3. Front axle according Claim 2, **characterised in that** the rubber lip seal (36) allocated to the upper bearing point (18) is armoured by means of a metal inlay and, located next to the lower row of rollers of the needle bearing (22), contacts with its sealing lips the cylindrical internal face of the sleeve (24), the external face of the steering-knuckle section (20) and the upper axle-body support face (7) in a sealing manner.

4. Front axle according Claim 1, **characterised in that** the sleeve (24) of the upper bearing point (18) is designed as a single-piece pot-shaped deep-drawing part made from sheet steel and subsequently machined at some points insofar as this is necessary.

5. Front axle according Claim 1, **characterised in that** the first pot-shaped part of the sleeve (25) of the lower bearing point (19) consists of a bottom (27), an abutting cylindrical wall (41) and an abutting extension (34) with its bottom (33), cylindrical external wall (42) and a larger diameter (34) and is designed as a single piece made from sheet steel produced in a deep-drawing manufacturing process and is subsequently machined at some points insofar as this is necessary and that the sliding sleeve (40) made from synthetic material or from sheet steel produced in a deep-drawing manufacturing process sits with a cylindrical guide section (44) on the cylindrical external wall (42) of the extension (34) in a frictional manner and can be axially shifted along said extension (34).

6. Front axle according to Claim 1, **characterised in that** the upper free margin area of the external wall (42) of the extension (34) is embraced at the first part (39) of the pot-shaped sleeve (25) by the rubber lip seal (51) which seals with its sealing lips the interior of the sleeve (25) and the axial sliding or roller bearing (31, 32) towards the shim (30) or the lower axle-body support face (8).

7. Front axle according to Claim 6, **characterised in that** the sliding sleeve (40) overlaps the upper free end area of the first pot-shaped part (39) of the sleeve (25) including the rubber lip seal (51).

8. Front axle according Claim 1, **characterised in that** the upper ring-type cylindrical margin area (61) of the sliding sleeve (40) which with its upper end section (61) is displaced into the jaw (11) of the steering knuckle (2) and thereby penetrates into a ring groove (53) axially undercutting the lower axle-body support face (8), is embraced by said ring groove (53) internally, externally and at the end face at such a distance that an annular duct forming the sealing labyrinth and having a U-cross-section open towards the bottom remains.

9. Front axle according to Claim 8, **characterised in that** the sliding sleeve (40) is provided with a continuous ring-type projection (54) on its outside, which ringtype projection (54) performs the function of a stop and acts together with the lower support face (8) on the axle body (3) to limit the axial depth to which the sliding sleeve (40) penetrates into the ring groove (53).

10. Front axle according to Claim 1, **characterised in that** the pot-shaped sleeve (24; 25, 39) of each bearing point (18, 19) is, in the centre of its bottom (26, 27), provided with a depression (55, 56) with a small passage bore (57, 58) through which a lubricant can be supplied to the bearing interior through the application of pressure after completion of the axle assembly and which can subsequently be closed by means of a blind plug (59, 60).

## Revendications

1. Essieu avant d'un camion ou d'un autocar, comportant des roues directrices non motrices portées par des supports de fusée (2) montés pivotants sur un essieu rigide (3) par des axes-pivot de fusée (4) dont chacun est monté par son segment supérieur et son segment inférieur (20, 21) dans au moins un palier (22, 23) d'un perçage de palier (16, 17) des branches de la fourche du support de fusée (2) et dont la partie intermédiaire (10) est ajustée dans un perçage (9) réalisé dans la chape fermée de l'essieu, l'essieu (3) ayant au niveau de sa chape, une face supérieure et une face inférieure avec des surfaces d'appui (7, 8) parallèles, avec lesquelles il pénètre avec sa chape dans le logement (11) du support de fusée (2) en s'appuyant axialement sur des surfaces antagonistes (12, 13) correspondantes,
**caractérisé par**
un montage sans entretien du palier support d'essieu/paliers de l'axe-pivot de fusée, selon lequel :
- le palier supérieur et le palier inférieur (18, 19) comportent chaque fois notamment une double rangée de paliers à aiguilles (22, 23) logée dans un manchon (24, 25) adapté dans le perçage des paliers (16, 17) correspondants du support de fusée (2), ce manchon ayant une forme de pot et son fond (26, 27) recouvre la surface frontale extérieure voisine (28, 29) de l'axe-pivot de fusée (4),
- l'essieu (3) est appuyé par sa surface d'appui inférieure (8) avec interposition d'au moins une rondelle ajustée (30) compensant les tolérances axiales ainsi que par un palier lisse axial ou à galet (31, 32) et le fond (33) d'une extension (34) du manchon en forme de pot (25) recevant ce palier (31, 32), pour le palier inférieur (19), contre la surface complémentaire inférieure (13) du logement du support de fusée (2),
- le volume intérieur du manchon supérieur (24) est rendu étanche en partie inférieure au moins par un joint lèvre en caoutchouc (36) et le volume intérieur du manchon inférieur (25) est rendu étanche en haut par un joint lèvre en caoutchouc (51) et un joint en labyrinthe (53, 61) supplémentaire par rapport à l'essieu (3), ce joint d'étanchéité en labyrinthe (53, 61) étant formé par un manchon (40) pénétrant dans la zone du logement (11) du support de fusée et coulissant le long de la paroi extérieure cylindrique (42) de l'extension (34) du manchon inférieur (25), et dont le segment d'extrémité libre supérieur (61) pénétre dans la surface d'appui (8) inférieure de la chape de l'essieu, dans une rainure annulaire (53) à contre dépouille axiale.

2. Essieu avant selon la revendication 1,
**caractérisé en ce que**
l'étanchéité par rapport à l'essieu (3) du volume intérieur du manchon de palier supérieur (24) est assurée, en plus du joint lèvre en caoutchouc (36), également par un joint en labyrinthe supplémentaire (53, 61) et pour cela le manchon de palier (24) est prolongé par son bord inférieur (37) de sa paroi cylindrique dans le logement (11) du support de fusée (2) en forme de fourche, pour pénétrer dans une rainure annulaire (38) réalisée dans la surface d'appui supérieure (77) de la chape fermée de l'essieu (3), cette rainure ayant une contre dépouille axiale, et entourant intérieurement, extérieurement et frontalement le bord inférieur (37) du manchon de palier (24) avec une distance formant un canal annulaire en labyrinthe à section U ouverte vers le haut.

3. Essieu avant selon la revendication 2,
**caractérisé en ce que**
le joint lèvre en caoutchouc (36) associé au palier supérieur (18) est armé par un insert métallique et ce joint qui fait suite à la rangée inférieure de galets du roulement à aiguille (22) est appliqué de manière étanche par ses lèvres d'étanchéité contre la surface intérieure cylindrique du manchon (24), la surface extérieure du segment (20) et la surface d'appui supérieure (7) de la chape d'essieu.

4. Essieu avant selon la revendication 1,
**caractérisé en ce que**
le manchon (24) du palier supérieur (18) est réalisé en tôle d'acier en une seule pièce obtenue par emboutissage profond en forme pot, et le cas échéant cette pièce a subi par endroit un usinage avec enlèvement de copeaux.

5. Essieu avant selon la revendication 1,
**caractérisé en ce que**
la première partie en forme de pot du manchon (25) du palier inférieur (19) se compose d'un fond (27) se poursuivant par une paroi cylindrique (41) avec ensuite l'extension de diamètre (34) suivie de son fond (33) et de sa paroi cylindrique (42), en étant réalisé en une seule pièce en tôle d'acier par emboutissage profond et le cas échéant un usinage par enlèvement de copeaux à certains endroits, et le manchon coulissant (40) est fabriqué en matière plastique ou par emboutissage profond d'une tôle d'acier avec un segment de guidage cylindrique (44), coulissant en friction sur la paroi extérieure cylindrique (42) de l'extension (34) sur laquelle il s'appuie.

6. Essieu avant selon la revendication 1,
**caractérisé en ce que**
le bord supérieur libre de la paroi extérieure (42) de l'extension (34) de la première partie (39) du manchon (25) en forme de pot est entouré par le joint lèvre en caoutchouc (51) qui assure l'étanchéité par ses lèvres du volume intérieur du manchon (25) ainsi que du palier lisse axial ou du palier à galets (31, 32) par rapport à la rondelle d'ajustage (30) ou à la surface d'appui (8) inférieure de la chape de l'essieu.

7. Essieu avant selon la revendication 6,
**caractérisé en ce que**
la zone d'extrémité supérieure libre de la première partie (39) en forme de pot du manchon (25) y compris le joint lèvre en caoutchouc (51) est chevauché par le manchon coulissant (40).

8. Essieu avant selon la revendication 1,
**caractérisé en ce que**
le bord cylindrique circulaire supérieur (61) du manchon (40) qui pénètre par son extrémité supérieure dans le logement (11) du support de fusée (2) et dans une rainure annulaire (53) à contre dépouille axiale réalisée dans la surface d'appui inférieure (8) de la chape d'essieu, est entouré intérieurement, extérieurement et du côté frontal par la rainure annulaire (53) en laissant une distance pour former un canal annulaire constituant le joint en labyrinthe avec une section U ouverte vers le bas.

9. Essieu avant selon la revendication 8,
**caractérisé en ce que**
le manchon coulissant (40) comporte une saillie annulaire (54) débordant vers l'extérieur et qui fonctionne comme butée en coopérant avec la surface d'appui inférieure (8) de la chape de l'essieu (3), pour limiter la profondeur de pénétration axiale du manchon coulissant (40) dans la rainure annulaire (53).

10. Essieu avant selon la revendication 1,
**caractérisé en ce que**
le manchon (24, 25, 39) en forme de pot de chaque palier (18, 19) comporte au milieu de son fond (26, 27) une cavité (55, 56) munie d'un petit perçage traversant (57, 58) par lequel à la fin du montage de la fusée sur l'essieu on introduit un agent lubrifiant sous pression à l'intérieur du palier et on ferme ensuite chaque cavité par un bouchon (59, 60).
